# EUROPEAN PATENT SPECIFICATION

(11) **EP 3 367 584 B1**
(45) Date of publication and mention of the grant of the patent: **17.02.2021**
(21) Application number: 16856812.9
(22) Date of filing: 29.09.2016
(51) Int. Cl.: H04B 7/0456, H04W 88/08, H04B 7/06

(54) **DOWNLINK DATA TRANSMISSION METHOD, EQUIPMENT, AND SYSTEM**
DOWNLINK-DATENÜBERTRAGUNGSVERFAHREN, VORRICHTUNG UND SYSTEM
PROCÉDÉ, ÉQUIPEMENT ET SYSTÈME DE TRANSMISSION DE DONNÉES DE LIAISON DESCENDANTE

(30) Priority: 20.10.2015 CN 201510683971
(43) Date of publication of application: 29.08.2018
(73) Proprietor: China Academy of Telecommunications Technology, Hai Dian District Beijing 100191 (CN)
(72) Inventor: SU, Xin, Beijing 100191 (CN); SONG, Yang, Beijing 100191 (CN); LI, Chuanjun, Beijing 100191 (CN)
(74) Representative: Körfer, Thomas
(86) International application number: PCT/CN2016/100847
(87) International publication number: WO 2017/067379

(56) References cited:
- CN-A- 102 291 855
- CN-A- 103 546 412
- CN-A- 103 731 884
- CN-A- 104 079 329
- US-A1- 2013 100 907
- US-A1- 2015 124 688
- SHIBATA NAOTAKA ET AL: "System level performance of uplink transmission in split-PHY processing architecture with joint reception for future radio access", 2015 IEEE 26TH ANNUAL INTERNATIONAL SYMPOSIUM ON PERSONAL, INDOOR, AND MOBILE RADIO COMMUNICATIONS (PIMRC), IEEE, 30 August 2015 (2015-08-30), pages 1375-1379, XP032822180, DOI: 10.1109/PIMRC.2015.7343513 [retrieved on 2015-12-01]

## Description

This application claims the benefit of Chinese Patent Application No. 201510683971.5, filed with the Chinese Patent Office on October 20, 2015 and entitled "A method, device, and system for transmitting downlink data".

### Field

The present invention relates to the field of communications, and particularly to a method, device, and system for transmitting downlink data.

### Background

Since a Multi-Input Multi-Output (MIMO) technology is of great importance to an improved peak rate and an improved system spectrum utilization ratio, the Long Term Evolution (LTE), LTE-Advanced (LTE-A), and other radio access technology standards have been set up based upon an Orthogonal Frequency Division Multiplexing (OFDM) technology combined with the MIMO technology.

A performance gain of the MIMO technology stems from a spatial freedom available to a multi-antenna system, so extended dimensions are highly important to the evolving MIMO technology being standardized.

In a base station antenna system structured as a traditional Passive Antenna System (PAS), a plurality of antenna ports are arranged horizontally, and a plurality of array elements in the vertical dimension corresponding to each antenna port are connected with each other over radio frequency cables, where each antenna port corresponds to a separate radio frequency-intermediate frequency-baseband channel, so for the existing MIMO technology, only spatial characteristics of respective terminal signals in the horizontal dimension can be optimized via adjusting relative amplitudes or phases between different antenna ports, and in the vertical dimension, only uniform sector-level beam-forming can be performed thereon. After an Active Antenna System (AAS) technology is introduced to a mobile communication system, the base station antenna system can be provided with a higher freedom in the vertical dimension, and can optimize a signal of a User Equipment (UE) (or a terminal) in a three-dimensional space.

Further to the study, standardization, and antenna technology development above, the MIMO technology is being further advanced into a three-dimension and massive MIMO technology. The massive MIMO technology can greatly improve the utilization efficiency of system bands, and support a larger number of subscribers.

However as the scale of antennas is growing, there will be a significant data traffic load on an interface between an antenna and a Base Band Unit (RRU), where the interface is also referred to as a fronthaul interface.

There are generally the following three solutions at present.

Firstly the number of optic fibers is increased, or the existing optic fibers are replaced with high-bandwidth optic fibers.

A common interface protocol between a ground baseband device and a Remote Radio Unit (RRU) on a tower, in the existing base station system is the Common Public Radio Interface (CPRI) protocol. As per this protocol, given a bandwidth of 20MHz, for example, when there is a data sampling rate of 30.72MHz, I and Q branches of OFDM modulated symbols are sampled using 16 bits and encoded using 8B/10B respectively, so a data rate required for data on a single antenna port is 30.72×16×2×10/8=1228.8Mbps, where 8B/10B represents an input of 8 bits, and an output of 10 bits, or an input of 8 bytes, and an output of 10 bytes. For downlink transmission, one 10G optic fiber, or two 5G or 6G optic fibers is or are required for eight antenna ports of a base station; and when there are 128 antenna ports of the base station, 32 5G or 6G optic fibers, or 16 10G optic fibers are required if data are not compressed. When the scale or bandwidth of the antennas is further extended, for example, there may be a system bandwidth of more than IGHz in the time domain for a future system, there will be a sharply growing data transmission load on the fronthaul interface, and consequently there will be an increase in amount of data over the optic fibers, thus greatly hindering the devices of the active antenna system from being miniaturized, installed, operated, and maintained.

Secondly the BBU function of the base station is integrated into the AAS system.

In this solution, all the functions of the base station, i.e., the BBU, the RRU, and the PAS, are integrated into the AAS, so the AAS is also referred to as an active integrated base station. In this solution, a lot of data interactions via the fronthaul interface are performed in the AAS, and actually the fronthaul interface disappears as the functions of the base station are highly integrated; and since the redundancy of data being transmitted from the AAS to a core network is greatly lowered, a backhaul link from the base station to the core network, i.e., a data rate of the fronthaul interface, can be well controlled. However since the AAS is highly integrated, there are a volume constraint, a heat dissipation constraint, and other constraints thereof, thus hindering the total transmit power from being improved, and a high-performance sophisticated baseband processing algorithm from being executed. Furthermore all the baseband processing functions are performed separately in respective sectors in a distributed manner, thus hindering access nodes from being synchronized with each other, and a coordinated process from being performed over the network, which may limit the overall performance in a heterogeneous and dense networking environment. Of more importance, this architecture contradicts the idea of cooperative and integrated baseband processing in the Centralized/Cooperative/Cloud/Clean-Radio Access Network (C-RAN) architecture centered on AAS+ cloud computing. Moreover the process and the design required for the highly integrated AAS may make it difficult to control the cost thereof.

Thirdly a Dense Wave Division Multiplexing (DWDM) or a Radio Over Fiber (ROF) technology is applied.

This solution can reduce the number of optic fibers to be required, but the complexity and cost of the devices may be significantly increased.
The patent US 2015/124688 A1 discloses multistage beamforming of multiple-antenna communication system. Particularly, a multistage beamforming circuit includes a data unit that implements a frequency domain beamforming stage and a remote radio head that implements a time-domain broadband beamforming stage. The data unit implements the frequency domain beamforming stage by converting K received data streams into M precoding output streams in a frequency-domain. The data unit is configured to transform the M output streams to M OFDM time-domain signals. The remote radio head, or integrated radio unit is configured to implement a time-domain broadband beamforming stage by converting the M OFDM time-domain signals into N transmit streams of time-domain samples. The remote radio head, or integrated radio unit includes a transmit antenna array configured to transmit the N transmit streams that together form broadcast beams and user-specific beams. The antenna array includes a plurality of physical antennas. The number N of transmit streams is greater than the number M of precoding output streams.
The patent US 2013/100907 A1 discloses downlink baseband signal generating method, relevant device and system. Particularly, the downlink baseband signal generating method includes: performing channel coding and modulation on a downlink data stream of a user in a cell, and obtaining a downlink coded and modulated user signal of the cell; generating a downlink control channel signal according to physical-layer control information; and forwarding the reference signal, synchronization signal, broadcast channel signal, downlink coded and modulated user signal, and downlink control channel signal to the corresponding RRU, so that the corresponding RRU performs MIMO precoding on the downlink coded and modulated user signal, maps the MIMO-precoded signal, the downlink control channel signal, reference signal, synchronization signal, and broadcast channel signal to their respective subcarriers, performs IFFT transformation to obtain a downlink baseband signal, and sends the signal out. The embodiments of the present invention can reduce the signal transmission bandwidth between the C-RAN node and the RRU.
SHIBATA NAOTAKA ET AL: "System level performance of uplink transmission in split-PHY processing architecture with joint reception for future radio access" , 2015 IEEE 26TH ANNUAL INTERNATIONAL SYMPOSIUM ON PERSONAL, INDOOR, AND MOBILE RADIO COMMUNICATIONS (PIMRC), IEEE, 30 August 2015, proposes system level performance of uplink transmission in split-PHY processing architecture with joint reception for future radio access. More specifically, the SPP architecture splits the PHY functions of the base station so that some PHY functions are implemented on the remote radio head (RRH). Compared to the centralized radio access network (C-RAN) architecture with common public radio interface (CPRI), the SPP architecture significantly reduces the required optical bandwidth in the mobile front-haul. Moreover, by implementing the FEC processing in the baseband unit (BBU), joint reception can be realized in uplink transmissions by forwarding the quantized log likelihood ratio (LLR) from RRHs to the BBU. System level evaluations show that the SPP architecture improves the cell-edge user throughput by 116% compared with the MAC-PHY split architecture without coordinated operations while reducing the required optical bandwidth by 92% compared with the CRAN architecture.

### Summary

Embodiments of the invention provide methods and devices for transmitting downlink data so as to lower a data transmission load on a data fronthaul interface.

The invention is defined by the appended independent claims. While several embodiments and/or examples have been disclosed in this description, the subject matter for which protection is sought is strictly and solely limited to those embodiments and/or examples encompassed by the scope of the appended claims. Embodiments and/or examples mentioned in the description that do not fall under the scope of the claims are only useful for understanding the technical background of the invention. Particular technical solutions according to the embodiments of the invention are as follows.

A first embodiment provides a method for transmitting downlink data, the method including: receiving, by a first device, data of a scheduled terminal, a resource allocation scheme of the scheduled terminal, and a beam-forming vector or a pre-coding matrix used by the scheduled terminal in the resource allocation scheme, transmitted by a second device via a fronthaul interface, wherein the data of the scheduled terminal are data obtained by the second device via performing first space-domain preprocessing on baseband data of the scheduled terminal; wherein the first space-domain preprocessing at least comprises: scrambling and modulating the baseband data of the scheduled terminal, and mapping the data of the scheduled terminal to a plurality of data layers according to a number of parallel data streams which can be supported; performing, by the first device, second space-domain preprocessing on the data of the scheduled terminal; and converting, by the first device, data obtained as a result of the second space-domain preprocessing into a radio frequency signal, and transmitting the radio frequency signal; wherein the performing, by the first device, the second space-domain preprocessing on the data of the scheduled terminal comprises: mapping, by the first device, the data of the scheduled terminal from data layers to reference signal ports according to a mapping relationship between the data layers and the reference signal ports, and performing beam-forming on the data of the scheduled terminal using the beam-forming vector, or performing pre-coding processing on the data of the scheduled terminal using the pre-coding matrix, and mapping beam-formed or pre-coded data of the scheduled terminal to a sub-carrier.

A second embodiment provides a method for transmitting downlink data, the method including: performing, by a second device, first space-domain preprocessing on baseband data of a scheduled terminal to obtain data of the scheduled terminal, wherein the first space-domain preprocessing at least comprises: scrambling and modulating the baseband data of the scheduled terminal, and mapping the data of the scheduled terminal obtained as a result of scrambling and modulation to a plurality of data layers according to a number of parallel data streams which can be supported; determining, by the second device, a resource allocation scheme of the scheduled terminal, and a beam-forming vector or a pre-coding matrix used by the scheduled terminal in the resource allocation scheme; and transmitting, by the second device, the data of the scheduled terminal, the resource allocation scheme of the scheduled terminal, and the beam-forming vector or the pre-coding matrix used by the scheduled terminal in the resource allocation scheme to a first device via a fronthaul interface, so that the first device performs second space-domain preprocessing on the data of the scheduled terminal and then converts data obtained as a result of the second space-domain preprocessing into a radio frequency signal, and transmits the radio frequency signal, wherein the step of the second space-domain preprocessing on the data of the scheduled terminal performed by the first device comprises: mapping the data of the scheduled terminal from the data layers to reference signal ports according to a mapping relationship between the data layers and the reference signal ports, and performing beam-forming on the data of the scheduled terminal using the beam-forming vector, or performing pre-coding processing on the data of the scheduled terminal using the pre-coding matrix, and mapping beam-formed or pre-coded data of the scheduled terminal to a sub-carrier.

A third embodiment provides a device for transmitting downlink data, the device including:
a receiving module configured to receive data of a scheduled terminal, a resource allocation scheme of the scheduled terminal, and a beam-forming vector or a pre-coding matrix used by the scheduled terminal in the resource allocation scheme, transmitted by a second device via a fronthaul interface, wherein the data of the scheduled terminal are data obtained by the second device via performing first space-domain preprocessing on baseband data of the scheduled terminal, wherein the first space-domain preprocessing at least comprises: scrambling and modulating the baseband data of the scheduled terminal, and mapping the data of the scheduled terminal to a plurality of data layers according to a number of parallel data streams which can be supported; a performing module configured to perform second space-domain preprocessing on the data of the scheduled terminal received by the receiving module, wherein the second space-domain preprocessing performed by the performing module on the data of the scheduled terminal received by the receiving module comprises: mapping, by the first device, the data of the scheduled terminal from data layers to reference signal ports according to a mapping relationship between the data layers and the reference signal ports, and performing beam-forming on the data of the scheduled terminal using the beam-forming vector, or performing pre-coding processing on the data of the scheduled terminal using the pre-coding matrix, and mapping beam-formed or pre-coded data of the scheduled terminal to a sub-carrier; and a transmitting module configured to convert data obtained by the performing module performing the second space-domain preprocessing into a radio frequency signal, and to transmit the radio frequency signal.

A fourth embodiment provides a device for transmitting downlink data, the device including: a performing module configured to perform first space-domain preprocessing on baseband data of a scheduled terminal to obtain data of the scheduled terminal and determine a resource allocation scheme of the scheduled terminal, and a beam-forming vector or a pre-coding matrix used by the scheduled terminal in the resource allocation scheme, wherein the first space-domain preprocessing at least comprises: scrambling and modulating the baseband data of the scheduled terminal, and mapping the data of the scheduled terminal obtained as a result of scrambling and modulation to a plurality of data layers according to a number of parallel data streams which can be supported; and a transmitting module configured to transmit the data of the scheduled terminal , the resource allocation scheme of the scheduled terminal, and the beam-forming vector or the pre-coding matrix used by the scheduled terminal in the resource allocation scheme to a first device via a fronthaul interface, so that the first device performs second space-domain preprocessing on the data of the scheduled terminal and converts data obtained as a result of the second space-domain preprocessing into a radio frequency signal and transmits the radio frequency signal, wherein the step of the second space-domain preprocessing on the data of the scheduled terminal performed by the first device comprises: mapping the data of the scheduled terminal from the data layers to reference signal ports according to a mapping relationship between the data layers and the reference signal ports, and performing beam-forming on the data of the scheduled terminal using the beam-forming vector, or performing pre-coding processing on the data of the scheduled terminal using the pre-coding matrix, and mapping beam-formed or pre-coded data of the scheduled terminal to a sub-carrier.

With the technical solutions above, in the embodiments of the invention, after the second device performs the first space-domain preprocessing on the baseband data of the scheduled terminal, the second device transmits the data obtained as a result of the first space-domain preprocessing to the first device via the fronthaul interface, and the first device performs the second space-domain preprocessing on the data of the scheduled terminal received via the fronthaul interface, so that the first device and the second device cooperate to perform the entire space-domain preprocessing, and the space-domain preprocessing in which a part of the redundancy is produced is performed by the first device, thus lowering the redundancy of data to be transmitted via the fronthaul interface, and the data transmission load on the data fronthaul interface. Furthermore this architecture can be adapted to the cooperative and centralized C-RAN network architecture centered on cloud computing, so that the network side can coordinate and optimize the data more comprehensively at a higher level and in a larger range.

### Brief Description of the Drawings

Fig. 1 is a schematic flow chart of a method for transmitting downlink data according to an embodiment of the invention;
Fig.2 is a schematic flow chart of another method for transmitting downlink data according to an embodiment of the invention;
Fig.3 is a schematic architectural diagram of a system for transmitting downlink data according to an embodiment of the invention;
Fig.4 is a schematic structural diagram of a device for transmitting downlink data according to an embodiment of the invention;
Fig.5 is a schematic structural diagram of another device for transmitting downlink data according to an embodiment of the invention;
Fig.6 is a schematic structural diagram of another device for transmitting downlink data according to an embodiment of the invention; and
Fig.7 is a schematic structural diagram of another device for transmitting downlink data according to an embodiment of the invention.

### Detailed Description of the Embodiments

In order to make the objects, technical solutions, and advantages of the invention more apparent, the invention will be described below in further details with reference to the drawings. In the following description several alternative technical features and alternative system configurations in respect of various technical aspects are provided. The alternative technical features and system configurations not directly falling under the scope of the appended independent claims are present for illustration purposes only, are not according to the invention, and should not be considered for the definition of the present invention. The scope of the present invention is strictly and solely defined by the appended independent claims.

In a base station architecture including a BBU, an RRU, and a PAS, or a BBU and an AAS, operations to be performed by the BBU at the physical layer in the downlink are generally as follows

Scrambling and modulation of a Code Word (CW), where a Transport Block (TB) transmitted by a higher layer is scrambled, and data are mapped into modulated symbols according to a modulation format.

Layer mapping, where a string of code words is converted into a plurality of data layers according to the number of parallel data streams, which can be supported, determined according to a condition of a channel, and/or a feedback of a terminal.

Layer-virtual antenna port mapping, where a virtual antenna port is also referred to as a reference signal port, and a data layer is mapped onto a reference signal port according to a transmission mode, for example, TM1, 2, 3, 4, 5, and 6 are mapped onto a Cell-Specific Reference Signal (CRS) port, and TM7, 8, 9, and 10 are mapped onto a Demodulation Reference Signal (DMRS) port.

Virtual antenna port-Transmitter/Receiver Unit (TX/RU) port mapping, where the mapping represents baseband sector-level beam-forming in a CRS-based transmission mode, and baseband UE-level beam-forming in a DMRS-based transmission mode.

Resource mapping and OFDM signal generation, where information of respective UEs is mapped onto corresponding sub-carriers according to a scheduling condition on each TX/RU port, and then samples in the frequency domain in a system bandwidth are OFDM-modulated into signal samples in the time domain.

Operations to be performed on an interface via which the BBU is connected with the RRU or the AAS are generally as follows.

At the BBU side, I and Q branches of signal samples in the time domain are sampled and encoded respectively, and transmitted data are compressed if necessary.

At the RRU side or the AAS side, received data are decompressed and decoded into the signal samples in the time domain.

An analysis thereof shows such a significant redundancy of data to be transmitted via the fronthaul interface that is primarily produced in mapping of the virtual antenna port to the TX/RU port. Particularly the number of virtual antenna ports is *N_{RS}*, and the number of TX/RU ports is *N_{TRU},* for example; and virtual antenna port-TX/RU port mapping in linear beam-forming can be represented as *y_{TRU}* = *W* · *x_{RS}*, where *y_{TRU}* is a *N_{TRU}* × 1 -dimension vector representing a signal vector input into a TX/RU port, and *x_{RS}* is a *N_{RS}* × 1 -dimension vector representing a signal vector from the virtual antenna port; and a mapping relationship between them is determined by a *N_{TRU}* × *N_{RS}* -dimension beam-forming matrix *W.* In a massive MIMO system, *N_{TRU}* is typically far greater than *N_{RS}.* As per the existing LTE specification, *N_{RS}* is at most 8. In order for a significant performance gain, *N_{TRU}* may be 64, 128, 256, or even more. With the mapping above, each data symbol in *x_{RS}* is actually assign by *W* with a different weight, and then reoccurs on *N_{TRU}* TX/RU.

Alike, some redundancy may also be introduced in layer-virtual antenna port mapping in addition to virtual antenna port to TX/RU port mapping. In the existing LTE specification, for example, both possible values of the number of layers, and the number of virtual antenna ports are 1, 2, 4, and 8, and the number of layers is less than or equal to the number of virtual antenna ports. When the number of virtual antenna ports is more than the number of layers, each data symbol at each layer will be mapped repeatedly onto all the virtual antenna ports after being converted or weighted. If there are a smaller number of virtual antenna ports, then there will be a just acceptable redundancy. However the number of virtual antenna ports may be further extended in the existing LTE specification, thus resulting in a consequentially improved redundancy.

In view of the analysis above, a core idea of the invention lies in that baseband processing functions in a downlink data transmission process is performed jointly by a first device and a second device, both of which are connected with each other via a fronthaul interface, that is, a part of the baseband processing functions are transferred to the RRU or the AAS to thereby lower a redundancy of data of each scheduled terminal to be transmitted via a fronthaul interface of the BBU to the RRU, or the BBU to the AAS, for the purpose of lowering a data transmission load of the data fronthaul interface.

In a possible implementation, in the respective embodiments of the invention, the first device refers to an outdoor component of a system for transmitting downlink data (e.g., a base station), i.e., an AAU or an RRU, and the second device refers to an indoor component of the system for transmitting downlink data, i.e., the BBU. It shall be noted that this is only exemplary, but the solutions according to the respective embodiments of the invention can be applicable to other forms of systems for transmitting downlink data.

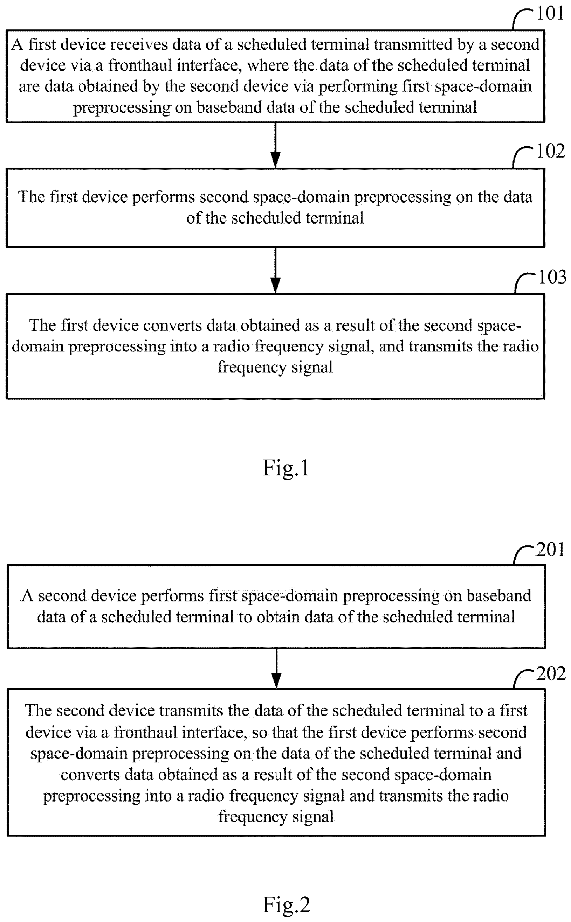

Based on the analysis above, a detailed flow of a method for transmitting downlink data according to an embodiment of the invention as illustrated in Fig. 1 is as follows.

In the operation 101, a first device receives data of a scheduled terminal transmitted by a second device via a fronthaul interface, where the data of the scheduled terminal are data obtained by the second device via performing first space-domain preprocessing on baseband data of the scheduled terminal.

Preferably the first device receives a resource allocation scheme of the scheduled terminal, and a beam-forming vector or a pre-coding matrix used by the scheduled terminal in the resource allocation scheme, transmitted by the second device via the fronthaul interface.

In the operation 102, the first device performs second space-domain preprocessing on the data of the scheduled terminal.

Where the first space-domain preprocessing at least includes: scrambling and modulating the baseband data of the scheduled terminal; and the second space-domain preprocessing at least includes: performing beam-forming or pre-coding processing on the data of the scheduled terminal.

In a particular implementation, the first device performs the second space-domain preprocessing on the data of the scheduled terminal in the following several implementations without any limitation thereto.

In a first implementation, the first device performs beam-forming on the data of the scheduled terminal using the beam-forming vector, or performs pre-coding processing on the data of the scheduled terminal using the pre-coding matrix, and maps beam-formed or pre-coded data of the scheduled terminal to a sub-carrier.

Here the first device performs beam-forming on the data of the scheduled terminal using the beam-forming vector, or performs pre-coding processing on the data of the scheduled terminal using the pre-coding matrix, as virtual antenna port-TX/RU port mapping in space-domain preprocessing.

In a possible implementation, the first device maps the beam-formed or pre-coded data of the scheduled terminal to the sub-carrier in such a way that the first device maps information of respective scheduled terminals onto corresponding sub-carriers according to a scheduling condition on each TX/RU port, and OFDM-modulates samples in the frequency domain in a system bandwidth into signal samples in the time domain, as resource mapping and OFDM signal generation in space-domain preprocessing.

In a particular implementation, the first device performs beam-forming on the data of the scheduled terminal using the beam-forming vector transmitted by the second device via the fronthaul interface, or performs pre-coding processing on the data of the scheduled terminal using the pre-coding matrix transmitted by the second device via the fronthaul interface.

In the first implementation, correspondingly the second device performs the first space-domain preprocessing on the baseband data of the scheduled terminal as follows.

The second device scrambles and modulates the baseband data of the scheduled terminal into the data of the scheduled terminal; maps the data of the scheduled terminal obtained as a result of scrambling and modulation to a plurality of data layers according to the number of parallel data streams which can be supported; and maps the data of the scheduled terminal from the data layers to reference signal ports according to a mapping relationship between the data layers and the reference signal ports.

Here the second device scrambles and modulates the baseband data of the scheduled terminal as scrambling and modulation of the code word in space-domain preprocessing. The second device maps the data of the scheduled terminal obtained as a result of scrambling and modulation to the plurality of data layers according to the number of parallel data streams which can be supported, as layer mapping in space-domain preprocessing. The second device maps the data of the scheduled terminal from the data layers to reference signal ports according to the mapping relationship between the data layers and the reference signal ports as layer-virtual antenna port mapping in space-domain preprocessing.

In a second implementation, the first device maps the data of the scheduled terminal from data layers to reference signal ports according to a mapping relationship between the data layers and the reference signal ports; and performs beam-forming on the data of the scheduled terminal using the beam-forming vector, or performs pre-coding processing on the data of the scheduled terminal using the pre-coding matrix, and maps the beam-formed or pre-coded data of the scheduled terminal to a sub-carrier.

Here the first device maps the data of the scheduled terminal from the data layers to the reference signal ports as layer-virtual antenna port mapping in space-domain preprocessing. The first device performs beam-forming on the data of the scheduled terminal using the beam-forming vector, or performs pre-coding processing on the data of the scheduled terminal using the pre-coding matrix, as virtual antenna port-TX/RU port mapping in space-domain preprocessing. In a possible implementation, the first device maps the beam-formed or pre-coded data of the scheduled terminal to the sub-carrier as resource mapping and OFDM signal generation in space-domain preprocessing.

In the second implementation, correspondingly the second device performs the first space-domain preprocessing on the baseband data of the scheduled terminal as follows.

The second device scrambles and modulates the baseband data of the scheduled terminal into the data of the scheduled terminal; and maps the data of the scheduled terminal obtained as a result of scrambling and modulation to a plurality of data layers according to the number of parallel data streams which can be supported.

Here the second device scrambles and modulates the baseband data of the scheduled terminal as scrambling and modulation of the code word in space-domain preprocessing. The second device maps the data of the scheduled terminal obtained as a result of scrambling and modulation to the plurality of data layers according to the number of parallel data streams which can be supported, as layer mapping in space-domain preprocessing.

In a third implementation, the first device maps the data of the scheduled terminal to a plurality of data layers according to the number of parallel data streams which can be supported; maps the data of the scheduled terminal from the data layers to reference signal ports according to a mapping relationship between the data layers and the reference signal ports; and performs beam-forming on the data of the scheduled terminal using the beam-forming vector, or performs pre-coding processing on the data of the scheduled terminal using the pre-coding matrix, and maps the beam-formed or pre-coded data of the scheduled terminal to a sub-carrier.

Here the first device maps the data of the scheduled terminal to the plurality of data layers according to the number of parallel data streams which can be supported, as layer mapping in space-domain preprocessing.

The first device maps the data of the scheduled terminal from the data layers to the reference signal ports as layer-virtual antenna port mapping in space-domain preprocessing. For example, the data are mapped to CRS ports in the TM1, 2, 3, 4, 5, and 6, and DMRS ports in the TM7, 8, 9, and 10.

The first device performs beam-forming on the data of the scheduled terminal using the beam-forming vector, or performs pre-coding processing on the data of the scheduled terminal using the pre-coding matrix, as virtual antenna port-TX/RU port mapping in space-domain preprocessing. In a possible implementation, the first device maps the beam-formed or pre-coded data of the scheduled terminal to the sub-carrier as resource mapping and OFDM signal generation in space-domain preprocessing.

In the third implementation, correspondingly the second device performs the first space-domain preprocessing on the baseband data of the scheduled terminal as follows.

The second device scrambles and modulates the baseband data of the scheduled terminal into the data of the scheduled terminal as scrambling and modulation of the code word in space-domain preprocessing.

In the operation 103, the first device converts data obtained as a result of the second space-domain preprocessing into a radio frequency signal, and transmits the radio frequency signal.

In the three implementations above, the operations of virtual antenna port to TX/RU port mapping, subsequent resource mapping and sub-carrier mapping, and other operations, in which a significant redundancy is produced, are performed by the first device, so that there is a greatly lowered redundancy of data to be transmitted by the second device via the fronthaul interface. For example, in a possible application scenario, the operations of virtual antenna port to TX/RU port mapping, and subsequent resource mapping and OFDM signal generation, in the BBU are transferred to the RRU or the AAS to thereby greatly lower the redundancy of data to be transmitted via the fronthaul interface from the BBU to the RRU or the AAS.

Furthermore since a part of space-domain preprocessing, e.g., resource allocation, resource scheduling, beam-forming vector or pre-coding matrix calculation, and other operations, is performed by the second device, and a part of space-domain preprocessing, e.g., a part or all of layer mapping, layer-virtual antenna port mapping, and virtual antenna port-TX/RU port mapping, is performed by the first device, this architecture can be adapted to the cooperative and centralized C-RAN network architecture centered on cloud computing, so that the network side can coordinate and optimize the data more comprehensively at a higher level and in a larger range.

Also since the core computing operations in space-domain preprocessing are performed on the second device, and all the operations on the first device are simple, the integrity, complexity, power consumption, and cost of the first device can be controlled in effect.

Based upon the same inventive idea, a detailed flow of a method for transmitting downlink data according to an embodiment of the invention as illustrated in Fig.2 is as follows.

In the operation 201, a second device performs first space-domain preprocessing on baseband data of a scheduled terminal to obtain data of the scheduled terminal.

In an implementation, the first space-domain preprocessing at least includes scrambling and modulation on the baseband data of the scheduled terminal.

In an implementation, the second device performs the first space-domain preprocessing on the baseband data of the scheduled terminal in the following several implementations without any limitation thereto.

In a first implementation, the second device scrambles and modulates the baseband data of the scheduled terminal into the data of the scheduled terminal.

In a second implementation, the second device scrambles and modulates the baseband data of the scheduled terminal into the data of the scheduled terminal; and maps the data of the scheduled terminal obtained as a result of scrambling and modulation to a plurality of data layers according to the number of parallel data streams which can be supported.

In a third implementation, the second device scrambles and modulates the baseband data of the scheduled terminal into the data of the scheduled terminal; maps the data of the scheduled terminal obtained as a result of scrambling and modulation to a plurality of data layers according to the number of parallel data streams which can be supported; and maps the data of the scheduled terminal from the data layers to reference signal ports according to a mapping relationship between the data layers and the reference signal ports.

In the operation 202, the second device transmits the data of the scheduled terminal to a first device via a fronthaul interface, so that the first device performs second space-domain preprocessing on the data of the scheduled terminal and converts data obtained as a result of the second space-domain preprocessing into a radio frequency signal and transmits the radio frequency signal.

In an implementation, the second space-domain preprocessing at least includes beam-forming or pre-coding processing on the data of the scheduled terminal.

Preferably the second device determines a resource allocation scheme of the scheduled terminal, and a beam-forming vector or a pre-coding matrix used by the scheduled terminal in the resource allocation scheme; and the second device transmits the resource allocation scheme of the scheduled terminal, and the beam-forming vector or the pre-coding matrix used by the scheduled terminal in the resource allocation scheme to the first device via the fronthaul interface.

In an implementation, in correspondence to the first space-domain preprocessing performed by the second device on the baseband data of the scheduled terminal, the first device performs the second space-domain preprocessing on the data of the scheduled terminal in the following several implementations without any limitation thereto.

In a first implementation, in correspondence to the first implementation of the first space-domain preprocessing performed by the second device on the baseband data of the scheduled terminal, the first device performs the second space-domain preprocessing on the data of the scheduled terminal particularly as follows.

The first device maps the data of the scheduled terminal to a plurality of data layers according to the number of parallel data streams which can be supported; maps the data of the scheduled terminal from the data layers to reference signal ports according to a mapping relationship between the data layers and the reference signal ports; and performs beam-forming on the data of the scheduled terminal using the beam-forming vector, or performs pre-coding processing on the data of the scheduled terminal using the pre-coding matrix, and maps beam-formed or pre-coded data of the scheduled terminal to a sub-carrier.

In a second implementation, in correspondence to the second implementation of the first space-domain preprocessing performed by the second device on the baseband data of the scheduled terminal, the first device performs the second space-domain preprocessing on the data of the scheduled terminal particularly as follows.

The first device maps the data of the scheduled terminal from the data layers to reference signal ports according to a mapping relationship between the data layers and the reference signal ports; and performs beam-forming on the data of the scheduled terminal using the beam-forming vector, or performs pre-coding processing on the data of the scheduled terminal using the pre-coding matrix, and maps beam-formed or pre-coded data of the scheduled terminal to a sub-carrier.

In a third implementation, in correspondence to the third implementation of the first space-domain preprocessing performed by the second device on the baseband data of the scheduled terminal, the first device performs the second space-domain preprocessing on the data of the scheduled terminal particularly as follows.

The first device performs beam-forming on the data of the scheduled terminal using the beam-forming vector, or performs pre-coding processing on the data of the scheduled terminal using the pre-coding matrix, and maps beam-formed or pre-coded data of the scheduled terminal to a sub-carrier.

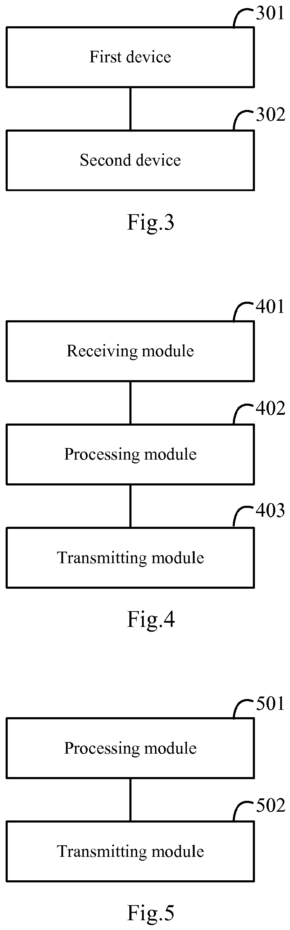

Based upon the same inventive idea, an embodiment of the invention further provides a system for transmitting downlink data as illustrated in Fig.3, where the system generally includes a first device 301 and a second device 302.

The second device 302 is configured to perform first space-domain preprocessing on baseband data of a scheduled terminal to obtain data of the scheduled terminal, and to transmit the data of the scheduled terminal to the first device 301 via a fronthaul interface.

The first device 301 is configured to receive the data of the scheduled terminal transmitted by the second device 302 via the fronthaul interface, to perform second space-domain preprocessing on the data of the scheduled terminal, to convert data obtained as a result of the second space-domain preprocessing into a radio frequency signal, and to transmit the radio frequency signal.

In an implementation, the first space-domain preprocessing at least includes: scrambling and modulating the baseband data of the scheduled terminal; and the second space-domain preprocessing at least includes: performing beam-forming or pre-coding processing on the data of the scheduled terminal.

Preferably the second device 302 is further configured: to determine a resource allocation scheme of the scheduled terminal, and a beam-forming vector or a pre-coding matrix used by the scheduled terminal in the resource allocation scheme, and to transmit the resource allocation scheme of the scheduled terminal, and the beam-forming vector or the pre-coding matrix used by the scheduled terminal in the resource allocation scheme to the first device 301 via the fronthaul interface.

The first device 301 is further configured: to receive the resource allocation scheme of the scheduled terminal, and the beam-forming vector or the pre-coding matrix used by the scheduled terminal in the resource allocation scheme, transmitted by the second device 302 via the fronthaul interface.

In an implementation, the first device and the second device perform their respective space-domain preprocessing differently in the following several particular implementations.

In a first implementation, the second device 302 is configured to perform the first space-domain preprocessing on the baseband data of the scheduled terminal by scrambling and modulating the baseband data of the scheduled terminal.

The first device 301 is configured to perform the second space-domain preprocessing on the data of the scheduled terminal by: mapping the data of the scheduled terminal to a plurality of data layers according to the number of parallel data streams which can be supported; mapping the data of the scheduled terminal from the data layers to reference signal ports according to a mapping relationship between the data layers and the reference signal ports; and performing beam-forming on the data of the scheduled terminal using the beam-forming vector, or performing pre-coding processing on the data of the scheduled terminal using the pre-coding matrix, and mapping beam-formed or pre-coded data of the scheduled terminal to a sub-carrier.

In a second implementation, the second device 302 is configured to perform the first space-domain preprocessing on the baseband data of the scheduled terminal by scrambling and modulating the baseband data of the scheduled terminal into the data of the scheduled terminal, and mapping the data of the scheduled terminal to a plurality of data layers according to the number of parallel data streams which can be supported.

The first device 301 is configured to perform the second space-domain preprocessing on the data of the scheduled terminal by: mapping the data of the scheduled terminal from the data layers to reference signal ports according to a mapping relationship between the data layers and the reference signal ports; and performing beam-forming on the data of the scheduled terminal using the beam-forming vector, or performing pre-coding processing on the data of the scheduled terminal using the pre-coding matrix, and mapping beam-formed or pre-coded data of the scheduled terminal to a sub-carrier.

In a third implementation, the second device 302 is configured to perform the first space-domain preprocessing on the baseband data of the scheduled terminal by: scrambling and modulating the baseband data of the scheduled terminal into the data of the scheduled terminal, mapping the data of the scheduled terminal to a plurality of data layers according to the number of parallel data streams which can be supported, and mapping the data of the scheduled terminal from the data layers to reference signal ports according to a mapping relationship between the data layers and the reference signal ports.

The first device 301 is configured to perform the second space-domain preprocessing on the data of the scheduled terminal by: performing beam-forming on the data of the scheduled terminal using the beam-forming vector, or performing pre-coding processing on the data of the scheduled terminal using the pre-coding matrix, and mapping beam-formed or pre-coded data of the scheduled terminal to a sub-carrier.

Based upon the same inventive idea, an embodiment of the invention further provide a device for transmitting downlink data, and reference can be made to the description of the first device in the respective embodiments above for a particular implementation of the device, so repeated description thereof will be omitted here; and as illustrated in Fig.4, the device generally includes: a receiving module 401 is configured to receive data of a scheduled terminal transmitted by a second device via a fronthaul interface, where the data of the scheduled terminal are data obtained by the second device via performing first space-domain preprocessing on baseband data of the scheduled terminal; a performing module 402 is configured to perform second space-domain preprocessing on the data of the scheduled terminal received by the receiving module 401; and a transmitting module 403 is configured to convert data obtained by the performing module 402 performing the second space-domain preprocessing into a radio frequency signal, and to transmit the radio frequency signal.

In an implementation, the first space-domain preprocessing at least includes: scrambling and modulating the baseband data of the scheduled terminal; and the second space-domain preprocessing at least includes: performing beam-forming or pre-coding processing on the data of the scheduled terminal.

Preferably the receiving module 401 is further configured to receive a resource allocation scheme of the scheduled terminal, and a beam-forming vector or a pre-coding matrix used by the scheduled terminal in the resource allocation scheme, transmitted by the second device via the fronthaul interface.

In a particular implementation, the performing module 402 performs the second space-domain preprocessing on the data of the scheduled terminal in the following several implementations without any limitation thereto.

In a first implementation, the performing module 402 is configured to perform beam-forming on the data of the scheduled terminal using the beam-forming vector, or to perform pre-coding processing on the data of the scheduled terminal using the pre-coding matrix, and to map beam-formed or pre-coded data of the scheduled terminal to a sub-carrier.

In a second implementation, the performing module 402 is configured: to map the data of the scheduled terminal from data layers to reference signal ports according to a mapping relationship between the data layers and the reference signal ports, and to perform beam-forming on the data of the scheduled terminal using the beam-forming vector, or to perform pre-coding processing on the data of the scheduled terminal using the pre-coding matrix.

In a third implementation, the performing module 402 is configured: to map the data of the scheduled terminal to a plurality of data layers according to the number of parallel data streams which can be supported, to map the data of the scheduled terminal from the data layers to reference signal ports according to a mapping relationship between the data layers and the reference signal ports, and to perform beam-forming on the data of the scheduled terminal using the beam-forming vector, or to perform pre-coding processing on the data of the scheduled terminal using the pre-coding matrix.

In a possible implementation, the first device is an RRU or an AAS.

Based upon the same inventive idea, an embodiment of the invention further provide a device for transmitting downlink data, and reference can be made to the description of the second device in the respective embodiments above for a particular implementation of the device, so repeated description thereof will be omitted here; and as illustrated in Fig.5, the device generally includes: a performing module 501 is configured to perform first space-domain preprocessing on baseband data of a scheduled terminal to obtain data of the scheduled terminal; and a transmitting module 502 is configured to transmit the data of the scheduled terminal to a first device via a fronthaul interface, so that the first device performs second space-domain preprocessing on the data of the scheduled terminal and converts data obtained as a result of the second space-domain preprocessing into a radio frequency signal and transmits the radio frequency signal.

In an implementation, the first space-domain preprocessing at least includes: scrambling and modulating the baseband data of the scheduled terminal; and the second space-domain preprocessing at least includes: performing beam-forming or pre-coding processing on the data of the scheduled terminal.

Preferably the performing module 501 is further configured to determine a resource allocation scheme of the scheduled terminal, and a beam-forming vector or a pre-coding matrix used by the scheduled terminal in the resource allocation scheme.

The transmitting module 502 is further configured to transmit the resource allocation scheme of the scheduled terminal, and the beam-forming vector or the pre-coding matrix used by the scheduled terminal in the resource allocation scheme to the first device via the fronthaul interface.

In an implementation, the performing module 501 performs the first space-domain preprocessing on the baseband data of the scheduled terminal in the following several implementations without any limitation thereto.

In a first implementation, the performing module 501 is configured to scramble and modulate the baseband data of the scheduled terminal into the data of the scheduled terminal.

In a second implementation, the performing module 501 is configured: to scramble and modulate the baseband data of the scheduled terminal into the data of the scheduled terminal; and to map the data of the scheduled terminal obtained as a result of scrambling and modulation to a plurality of data layers according to the number of parallel data streams which can be supported.

In a third implementation, the performing module 501 is configured: to scramble and modulate the baseband data of the scheduled terminal into the data of the scheduled terminal; to map the data of the scheduled terminal obtained as a result of scrambling and modulation to a plurality of data layers according to the number of parallel data streams which can be supported; and to map the data of the scheduled terminal from the data layers to reference signal ports according to a mapping relationship between the data layers and the reference signal ports.

In a possible implementation, the second device is a BBU.

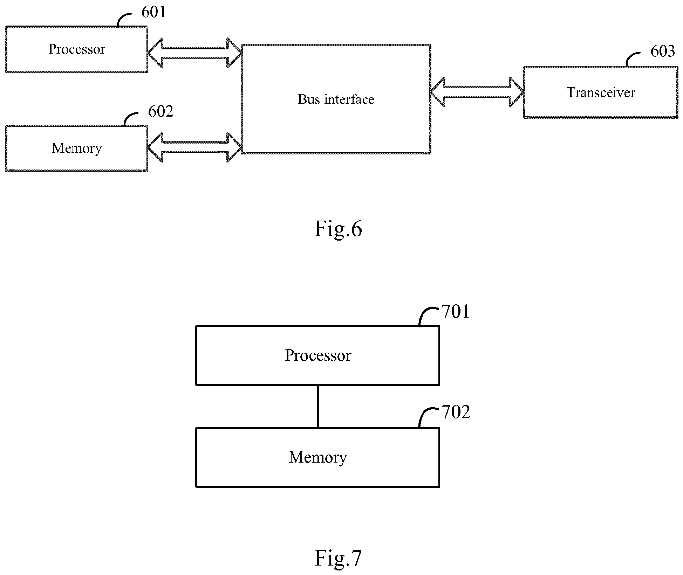

Based upon the same inventive idea, an embodiment of the invention further provide a device for transmitting downlink data, and reference can be made to the description of the first device in the respective embodiments above for a particular implementation of the device, so repeated description thereof will be omitted here; and as illustrated in Fig.6, the device generally includes a processor 601, a memory 602, and a transceiver 603 configured to be controlled by the processor 601 to receive and transmit data, where the memory 602 stores therein preset programs, and the processor 601 is configured to read and execute the programs in the memory 602 to: receive data of a scheduled terminal transmitted by a second device via a fronthaul interface, where the data of the scheduled terminal are data obtained by the second device via performing first space-domain preprocessing on baseband data of the scheduled terminal; perform second space-domain preprocessing on the data of the scheduled terminal; and convert data obtained as a result of the second space-domain preprocessing into a radio frequency signal, and transmit the radio frequency signal through the transceiver 603.

In an implementation, the first space-domain preprocessing at least includes: scrambling and modulating the baseband data of the scheduled terminal; and the second space-domain preprocessing at least includes: performing beam-forming or pre-coding processing on the data of the scheduled terminal.

Preferably the processor 601 is configured to receive a resource allocation scheme of the scheduled terminal, and a beam-forming vector or a pre-coding matrix used by the scheduled terminal in the resource allocation scheme, transmitted by the second device via the fronthaul interface.

In a particular implementation, the processor 601 performs the second space-domain preprocessing on the data of the scheduled terminal in the following several implementations without any limitation thereto.

In a first implementation, the processor 601 is configured to perform beam-forming on the data of the scheduled terminal using the beam-forming vector, or to perform pre-coding processing on the data of the scheduled terminal using the pre-coding matrix, and to map beam-formed or pre-coded data of the scheduled terminal to a sub-carrier.

In a second implementation, the processor 601 is configured to map the data of the scheduled terminal from data layers to reference signal ports according to a mapping relationship between the data layers and the reference signal ports, and to perform beam-forming on the data of the scheduled terminal using the beam-forming vector, or to perform pre-coding processing on the data of the scheduled terminal using the pre-coding matrix.

In a third implementation, the processor 601 is configured to map the data of the scheduled terminal to a plurality of data layers according to the number of parallel data streams which can be supported, to map the data of the scheduled terminal from the data layers to reference signal ports according to a mapping relationship between the data layers and the reference signal ports, and to perform beam-forming on the data of the scheduled terminal using the beam-forming vector, or to perform pre-coding processing on the data of the scheduled terminal using the pre-coding matrix.

Here the processor 601, the memory 602, and the transceiver 603 are connected over a bus, and the bus architecture can include any number of interconnecting buses and bridges to particularly link together various circuits including one or more processors represented by the processor, and one or more memories represented by the memory. The bus architecture can further link together various other circuits, e.g., peripheral devices, manostats, power management circuits, etc., all of which are well known in the art, so a further description thereof will be omitted in this context. The bus interface serves as an interface. The transceiver can be a number of elements including a transmitter and a receiver, which are units for communication with various other devices over a transmission medium. The processor is responsible for managing the bus architecture and performing normal processes, and the memory can store data for use by the processor in performing the operations.

Based upon the same inventive idea, an embodiment of the invention further provide a device for transmitting downlink data, and reference can be made to the description of the second device in the respective embodiments above for a particular implementation of the device, so repeated description thereof will be omitted here; and as illustrated in Fig.7, the device generally includes a processor 701 and a memory 702, where the memory 702 stores therein preset programs, and the processor 701 is configured to read and execute the programs in the memory 702 to: perform first space-domain preprocessing on baseband data of a scheduled terminal to obtain data of the scheduled terminal; and transmit the data of the scheduled terminal to a first device via a fronthaul interface, so that the first device performs second space-domain preprocessing on the data of the scheduled terminal and converts data obtained as a result of the second space-domain preprocessing into a radio frequency signal, and transmits the radio frequency signal.

In an implementation, the first space-domain preprocessing at least includes: scrambling and modulating the baseband data of the scheduled terminal; and the second space-domain preprocessing at least includes: performing beam-forming or pre-coding processing on the data of the scheduled terminal.

Preferably the processor 701 is configured to determine a resource allocation scheme of the scheduled terminal, and a beam-forming vector or a pre-coding matrix used by the scheduled terminal in the resource allocation scheme; and to transmit the resource allocation scheme of the scheduled terminal, and the beam-forming vector or the pre-coding matrix used by the scheduled terminal in the resource allocation scheme to the first device via the fronthaul interface.

In an implementation, the processor 701 performs the first space-domain preprocessing on the baseband data of the scheduled terminal in the following several implementations without any limitation thereto.

In a first implementation, the processor 701 is configured to scramble and modulate the baseband data of the scheduled terminal into the data of the scheduled terminal.

In a second implementation, the processor 701 is configured to scramble and modulate the baseband data of the scheduled terminal into the data of the scheduled terminal; and to map the data of the scheduled terminal obtained as a result of scrambling and modulation to a plurality of data layers according to the number of parallel data streams which can be supported.

In a third implementation, the processor 701 is configured to scramble and modulate the baseband data of the scheduled terminal into the data of the scheduled terminal; to map the data of the scheduled terminal obtained as a result of scrambling and modulation to a plurality of data layers according to the number of parallel data streams which can be supported; and to map the data of the scheduled terminal from the data layers to reference signal ports according to a mapping relationship between the data layers and the reference signal ports.

Here the processor 701 and the memory 702 are connected over a bus, and the bus architecture can include any number of interconnecting buses and bridges to particularly link together various circuits including one or more processors represented by the processor, and one or more memories represented by the memory. The bus architecture can further link together various other circuits, e.g., peripheral devices, manostats, power management circuits, etc., all of which are well known in the art, so a further description thereof will be omitted in this context. The bus interface serves as an interface. The processor is responsible for managing the bus architecture and performing normal processes, and the memory can store data for use by the processor in performing the operations.

In the technical solutions above according to the embodiments of the invention, after the second device performs the first space-domain preprocessing on the baseband data of the scheduled terminal, the second device transmits the data obtained as a result of the first space-domain preprocessing to the first device via the fronthaul interface, and the first device performs the second space-domain preprocessing on the data of the scheduled terminal received via the fronthaul interface, so that the first device and the second device cooperate to perform the entire space-domain preprocessing, and the space-domain preprocessing in which a part of the redundancy is produced is performed by the first device, thus lowering the redundancy of data to be transmitted via the fronthaul interface, and the data transmission load on the data fronthaul interface.

Furthermore in the embodiments of the invention, the second device transmits a resource mapping rule, a beam-forming vector or a pre-coding matrix, and other necessary information, of each scheduled terminal via the fronthaul interface, core computing operations are performed by the second device, and a simple part of the space-domain preprocessing is performed on the first device without significantly affecting the integrity, complexity, power consumption, and cost of the first device. This architecture can be adapted to the cooperative and centralized C-RAN network architecture centered on cloud computing, so that the network side can coordinate and optimize the data more comprehensively at a higher level and in a larger range.

Also a part of the space-domain preprocessing is performed by the first device to thereby lower the redundancy of data to be transmitted via the fronthaul interface so as to reduce the number of optic fibers between the first device and the second device.

Those skilled in the art shall appreciate that the embodiments of the invention can be embodied as a method, a system or a computer program product. Therefore the invention can be embodied in the form of an all-hardware embodiment, an all-software embodiment or an embodiment of software and hardware in combination Furthermore the invention can be embodied in the form of a computer program product embodied in one or more computer useable storage mediums (including but not limited to a disk memory, a CD-ROM, an optical memory, etc.) in which computer useable program codes are contained.

The invention has been described in a flow chart and/or a block diagram of the method, the device (system) and the computer program product according to the embodiments of the invention. It shall be appreciated that respective flows and/or blocks in the flow chart and/or the block diagram and combinations of the flows and/or the blocks in the flow chart and/or the block diagram can be embodied in computer program instructions. These computer program instructions can be loaded onto a general-purpose computer, a specific-purpose computer, an embedded processor or a processor of another programmable data processing device to produce a machine so that the instructions executed on the computer or the processor of the other programmable data processing device create means for performing the functions specified in the flow(s) of the flow chart and/or the block(s) of the block diagram.

These computer program instructions can also be stored into a computer readable memory capable of directing the computer or the other programmable data processing device to operate in a specific manner so that the instructions stored in the computer readable memory create an article of manufacture including instruction means which perform the functions specified in the flow(s) of the flow chart and/or the block(s) of the block diagram.

These computer program instructions can also be loaded onto the computer or the other programmable data processing device so that a series of operations are performed on the computer or the other programmable data processing device to create a computer implemented process so that the instructions executed on the computer or the other programmable device provide operations for performing the functions specified in the flow(s) of the flow chart and/or the block(s) of the block diagram.

Although the preferred embodiments of the invention have been described, those skilled in the art benefiting from the underlying inventive concept can make additional modifications and variations to these embodiments. Nevertheless the scope of the invention is strictly defined by the appended claims.

Evidently those skilled in the art can make various modifications and variations without departing from the scope of the invention. Thus the invention is also intended to encompass these modifications and variations thereto so long as the modifications and variations come into the scope of the claims appended to the invention.

## Claims

1. A method for transmitting downlink data, the method comprising:
receiving (101), by a first device, data of a scheduled terminal, a resource allocation scheme of the scheduled terminal, and a beam-forming vector or a pre-coding matrix used by the scheduled terminal in the resource allocation scheme, transmitted by a second device via a fronthaul interface, wherein the data of the scheduled terminal are data obtained by the second device via performing first space-domain preprocessing on baseband data of the scheduled terminal; wherein the first space-domain preprocessing at least comprises: scrambling and modulating the baseband data of the scheduled terminal, and mapping the data of the scheduled terminal to a plurality of data layers according to a number of parallel data streams which can be supported;
performing (102), by the first device, second space-domain preprocessing on the data of the scheduled terminal; and
converting (103), by the first device, data obtained as a result of the second space-domain preprocessing into a radio frequency signal, and transmitting the radio frequency signal; wherein the performing (102), by the first device, the second space-domain preprocessing on the data of the scheduled terminal comprises: mapping, by the first device, the data of the scheduled terminal from data layers to reference signal ports according to a mapping relationship between the data layers and the reference signal ports, and performing beam-forming on the data of the scheduled terminal using the beam-forming vector, or performing pre-coding processing on the data of the scheduled terminal using the pre-coding matrix, and mapping beam-formed or pre-coded data of the scheduled terminal to a sub-carrier.

2. A method for transmitting downlink data, the method comprising:
performing (201), by a second device, first space-domain preprocessing on baseband data of a scheduled terminal to obtain data of the scheduled terminal, wherein the first space-domain preprocessing at least comprises: scrambling and modulating the baseband data of the scheduled terminal, and mapping the data of the scheduled terminal obtained as a result of scrambling and modulation to a plurality of data layers according to a number of parallel data streams which can be supported;
determining, by the second device, a resource allocation scheme of the scheduled terminal, and a beam-forming vector or a pre-coding matrix used by the scheduled terminal in the resource allocation scheme; and
transmitting (202), by the second device, the data of the scheduled terminal, the resource allocation scheme of the scheduled terminal, and the beam-forming vector or the pre-coding matrix used by the scheduled terminal in the resource allocation scheme to a first device via a fronthaul interface, so that the first device performs second space-domain preprocessing on the data of the scheduled terminal and converts data obtained as a result of the second space-domain preprocessing into a radio frequency signal and transmits the radio frequency signal.

3. A device for transmitting downlink data, the device comprising:
a receiving module (401) configured to receive data of a scheduled terminal, a resource allocation scheme of the scheduled terminal, and a beam-forming vector or a pre-coding matrix used by the scheduled terminal in the resource allocation scheme, transmitted by a second device via a fronthaul interface, wherein the data of the scheduled terminal are data obtained by the second device via performing first space-domain preprocessing on baseband data of the scheduled terminal, wherein the first space-domain preprocessing at least comprises: scrambling and modulating the baseband data of the scheduled terminal, and mapping the data of the scheduled terminal to a plurality of data layers according to a number of parallel data streams which can be supported;
a performing module (402) configured to perform second space-domain preprocessing on the data of the scheduled terminal received by the receiving module (401), wherein the second space-domain preprocessing performed by the performing module (402) on the data of the scheduled terminal received by the receiving module (401) comprises: mapping, by the first device, the data of the scheduled terminal from data layers to reference signal ports according to a mapping relationship between the data layers and the reference signal ports, and performing beam-forming on the data of the scheduled terminal using the beam-forming vector, or performing pre-coding processing on the data of the scheduled terminal using the pre-coding matrix, and mapping beam-formed or pre-coded data of the scheduled terminal to a sub-carrier; and
a transmitting module (403) configured to convert data obtained by the performing module (402) performing the second space-domain preprocessing into a radio frequency signal, and to transmit the radio frequency signal.

4. A device for transmitting downlink data, the device comprising:
a performing module (501) configured to perform first space-domain preprocessing on baseband data of a scheduled terminal to obtain data of the scheduled terminal and determine a resource allocation scheme of the scheduled terminal, and a beam-forming vector or a pre-coding matrix used by the scheduled terminal in the resource allocation scheme, wherein the first space-domain preprocessing at least comprises: scrambling and modulating the baseband data of the scheduled terminal, and mapping the data of the scheduled terminal obtained as a result of scrambling and modulation to a plurality of data layers according to a number of parallel data streams which can be supported; and
a transmitting module (502) configured to transmit the data of the scheduled terminal, the resource allocation scheme of the scheduled terminal, and the beam-forming vector or the pre-coding matrix used by the scheduled terminal in the resource allocation scheme to a first device via a fronthaul interface, so that the first device performs second space-domain preprocessing on the data of the scheduled terminal and converts data obtained as a result of the second space-domain preprocessing into a radio frequency signal and transmits the radio frequency signal.

## Patentansprüche

1. Verfahren zur Übertragung von Downlink-Daten, wobei das Verfahren Folgendes aufweist:
Empfangen (101), durch ein erstes Gerät, von Daten eines vorgesehenen Terminals, eines Ressourcenzuweisungsschemas des vorgesehenen Terminals sowie eines Strahlformungsvektors oder einer von dem vorgesehenen Terminal in dem Ressourcenzuweisungsschema verwendeten Vorcodierungsmatrix, welche durch ein zweites Gerät über eine Fronthaul-Schnittstelle übertragen werden, wobei die Daten des vorgesehenen Terminals Daten darstellen, die durch das zweite Gerät über das Durchführen einer ersten Raumbereichs-Vorverarbeitung an Basisbanddaten des vorgesehenen Terminals erhalten werden; wobei die erste Raumbereichs-Vorverarbeitung zumindest Folgendes aufweist: Verwürfeln und Modulieren der Basisbanddaten des vorgesehenen Terminals, sowie Zuordnen der Daten des vorgesehenen Terminals zu einer Mehrzahl von Datenschichten gemäß einer Anzahl von parallelen Datenströmen, die unterstützt werden können;
Durchführen (102), durch das erste Gerät, einer zweiten Raumbereichs-Vorverarbeitung an den Daten des vorgesehenen Terminals; und
Umwandeln (103), durch das erste Gerät, von als Ergebnis der zweiten Raumbereichs-Vorverarbeitung erhaltenen Daten in ein Funkfrequenzsignal, und Übertragen des Funkfrequenzsignals;
wobei das Durchführen (102), durch das erste Gerät, der zweiten Raumbereichs-Vorverarbeitung an den Daten des vorgesehenen Terminals Folgendes aufweist: Zuordnen, durch das erste Gerät, der Daten des vorgesehenen Terminals aus Datenschichten zu Bezugssignalanschlüssen gemäß einer Zuordnungsbeziehung zwischen den Datenschichten und den Bezugssignalanschlüssen, und Durchführen von Strahlformung an den Daten des vorgesehenen Terminals unter Einsatz des Strahlformungsvektors, oder Durchführen von Vorcodierungs-Verarbeitung an den Daten des vorgesehenen Terminals unter Einsatz der Vorcodierungsmatrix, sowie Zuordnen von strahlgeformten oder vorcodierten Daten des vorgesehenen Terminals zu einem Zwischenträger.

2. Verfahren zur Übertragung von Downlink-Daten, wobei das Verfahren Folgendes aufweist:
Durchführen (201), durch ein zweites Gerät, von erster Raumbereichs-Vorverarbeitung an Basisbanddaten eines vorgesehenen Terminals, um Daten des vorgesehenen Terminals zu erhalten, wobei die erste Raumbereichs-Vorverarbeitung zumindest Folgendes aufweist: Verwürfeln und Modulieren der Basisbanddaten des vorgesehenen Terminals, sowie Zuordnen der Daten des vorgesehenen Terminals, die als Ergebnis von Verwürfelung und Modulation erhalten werden, an eine Mehrzahl von Datenschichten gemäß einer Anzahl paralleler Datenströme, welche unterstützt werden können;
Bestimmen, durch das zweite Gerät, eines Ressourcenzuweisungsschemas des vorgesehenen Terminals sowie eines Strahlformungsvektors oder einer Vorcodierungsmatrix, die von dem vorgesehenen Terminal in dem Ressourcenzuweisungsschema verwendet wird; und
Übertragen (202), durch das zweite Gerät, der Daten des vorgesehenen Terminals, des Ressourcenzuweisungsschemas des vorgesehenen Terminals sowie des Strahlformungsvektors oder der von dem vorgesehenen Terminal in dem Ressourcenzuweisungsschema verwendeten Vorcodierungsmatrix an ein erstes Gerät über eine Fronthaul-Schnittstelle, so dass das erste Gerät eine zweite Raumbereichs-Vorverarbeitung an den Daten des vorgesehenen Terminals durchführt und als Ergebnis der zweiten Raumbereichs-Vorverarbeitung erhaltene Daten in ein Funkfrequenzsignal umwandelt und das Funkfrequenzsignal überträgt.

3. Gerät zur Übertragung von Downlink-Daten, wobei das Gerät Folgendes aufweist:
ein Empfangsmodul (401), das zum Empfangen von Daten eines vorgesehenen Terminals, eines Ressourcenzuweisungsschemas des vorgesehenen Terminals und eines Strahlformungsvektors oder einer von dem vorgesehenen Terminal in dem Ressourcenzuweisungsschema verwendeten Vorcodierungsmatrix konfiguriert ist, die durch ein zweites Gerät über eine Fronthaul-Schnittstelle übertragen werden, wobei die Daten des vorgesehenen Terminals Daten darstellen, die durch das zweite Gerät über die Durchführung einer ersten Raumbereichs-Vorverarbeitung an Basisbanddaten des vorgesehenen Terminals erhalten werden, wobei die erste Raumbereichs-Vorverarbeitung zumindest Folgendes aufweist: Verwürfeln und Modulieren der Basisbanddaten des vorgesehenen Terminals, sowie Zuordnen der Daten des vorgesehenen Terminals zu einer Mehrzahl von Datenschichten gemäß einer Anzahl von parallelen Datenströmen, welche unterstützt werden können;
ein Durchführungsmodul (402), das zum Durchführen einer zweiten Raumbereichs-Vorverarbeitung an den durch das Empfangsmodul (401) empfangenen Daten des vorgesehenen Terminals konfiguriert ist, wobei die durch das Durchführungsmodul (402) an den durch das Empfangsmodul (401) empfangenen Daten des vorgesehenen Terminals durchgeführte, zweite Raumbereichs-Vorverarbeitung Folgendes aufweist: Zuordnen, durch das erste Gerät, der Daten des vorgesehenen Terminals aus Datenschichten zu Bezugssignalanschlüssen gemäß einer Zuordnungsbeziehung zwischen den Datenschichten und den Bezugssignalanschlüssen, sowie Durchführen von Strahlformung an den Daten des vorgesehenen Terminals unter Einsatz des Strahlformungsvektors, oder Durchführen von Vorcodierungsverarbeitung an den Daten des vorgesehenen Terminals unter Einsatz der Vorcodierungsmatrix, und Zuordnen von strahlgeformten oder vorcodierten Daten des vorgesehenen Terminals zu einem Zwischenträger; und
ein Übertragungsmodul (403), das zum Umwandeln von Daten, die durch das die zweite Raumbereichs-Vorverarbeitung durchführende Durchführungsmodul (402) erhalten werden, in ein Funkfrequenzsignal und zum Übertragen des Funkfrequenzsignals konfiguriert ist.

4. Gerät zum Übertragen von Downlink-Daten, wobei das Gerät Folgendes aufweist:
ein Durchführungsmodul (501), das zum Durchführen einer ersten Raumbereichs-Vorverarbeitung an Basisbanddaten eines vorgesehenen Terminals konfiguriert ist, um Daten des vorgesehenen Terminals zu erhalten und ein Ressourcenzuweisungsschema des vorgesehenen Terminals sowie einen Strahlformungsvektor oder eine durch den vorgesehenen Terminal in dem Ressourcenzuweisungsschema verwendete Vorcodierungsmatrix zu bestimmen, wobei die erste Raumbereichs-Vorverarbeitung zumindest Folgendes aufweist: Verwürfein und Modulieren der Basisbanddaten des vorgesehenen Terminals, sowie Zuordnen der Daten des vorgesehenen Terminals, die als Ergebnis von Verwürfelung und Modulation erhalten werden, zu einer Mehrzahl von Datenschichten gemäß einer Anzahl von parallelen Datenströmen, welche unterstützt werden können; sowie
ein Übertragungsmodul (502), das zum Übertragen der Daten des vorgesehenen Terminals, des Ressourcenzuweisungsschemas des vorgesehenen Terminals, sowie des Strahlformungsvektors oder der durch den vorgesehenen Terminal in dem Ressourcenzuweisungsschema verwendeten Vorcodierungsmatrix an ein erstes Gerät über eine Fronthaul-Schnittstelle konfiguriert ist, so dass das erste Gerät eine zweite Raumbereichs-Vorverarbeitung an den Daten des vorgesehenen Terminals durchführt und als Ergebnis der zweiten Raumbereichs-Vorverarbeitung erhaltene Daten in ein Funkfrequenzsignal umwandelt und das Funkfrequenzsignal überträgt.

## Revendications

1. Procédé de transmission de données de liaison descendante, le procédé comportant les étapes consistant à :
recevoir (101), par un premier dispositif, des données d'un terminal ordonnancé, un schéma d'allocation de ressources du terminal ordonnancé et un vecteur de formation de faisceau ou une matrice de précodage utilisé par le terminal ordonnancé dans le schéma d'allocation de ressources, transmises par un second dispositif via une interface frontale, dans lequel les données du terminal ordonnancé sont des données obtenues par le second dispositif via l'exécution d'un premier prétraitement dans le domaine spatial sur des données de bande de base du terminal ordonnancé ; dans lequel le premier prétraitement dans le domaine spatial comporte au moins les étapes consistant à : embrouiller et moduler les données de bande de base du terminal ordonnancé, et mapper les données du terminal ordonnancé à une pluralité de couches de données en fonction d'un nombre de flux de données parallèles qui peuvent être pris en charge ;
exécuter (102), par le premier dispositif, un second prétraitement dans le domaine spatial sur les données du terminal ordonnancé ; et
convertir (103), par le premier dispositif, des données obtenues en résultat du second prétraitement dans le domaine spatial en un signal radiofréquence, et transmettre le signal radiofréquence ;
dans lequel l'exécution (102), par le premier dispositif, du second prétraitement dans le domaine spatial sur les données du terminal ordonnancé comporte les étapes consistant à : mapper, par le premier dispositif, les données du terminal ordonnancé provenant de couches de données aux ports de signaux de référence en fonction d'une relation de mappage entre les couches de données et les ports de signaux de référence, et exécuter une formation de faisceau sur les données du terminal ordonnancé en utilisant le vecteur de formation de faisceau, ou réaliser un traitement de précodage sur les données du terminal ordonnancé en utilisant la matrice de précodage, et mapper des données formées en faisceau ou précodées du terminal ordonnancé à une sous-porteuse.

2. Procédé de transmission de données de liaison descendante, le procédé comportant les étapes consistant à :
exécuter (201), par un second dispositif, un premier prétraitement dans le domaine spatial sur des données de bande de base d'un terminal ordonnancé pour obtenir des données du terminal ordonnancé, dans lequel le premier prétraitement dans le domaine spatial comporte au moins les étapes consistant à : embrouiller et moduler les données de bande de base du terminal ordonnancé, et mapper les données du terminal ordonnancé obtenues en résultat de l'embrouillage et de la modulation à une pluralité de couches de données en fonction d'un nombre de flux de données parallèles qui peuvent être pris en charge ;
déterminer, par le second dispositif, un schéma d'allocation de ressources du terminal ordonnancé, et un vecteur de formation de faisceau ou une matrice de précodage utilisé par le terminal ordonnancé dans le schéma d'allocation de ressources ; et
transmettre (202), par le second dispositif, les données du terminal ordonnancé, le schéma d'allocation de ressources du terminal ordonnancé, et le vecteur de formation de faisceau ou la matrice de précodage utilisé par le terminal ordonnancé dans le schéma d'allocation de ressources à un premier dispositif via une interface frontale, de sorte que le premier dispositif exécute un second prétraitement dans le domaine spatial sur les données du terminal ordonnancé et convertit des données obtenues en résultat du second prétraitement dans le domaine spatial en un signal radiofréquence et transmet le signal radiofréquence.

3. Dispositif de transmission de données de liaison descendante, le dispositif comportant :
un module de réception (401) configuré pour recevoir des données d'un terminal ordonnancé, un schéma d'allocation de ressources du terminal ordonnancé, et un vecteur de formation de faisceau ou une matrice de précodage utilisé par le terminal ordonnancé dans le schéma d'allocation de ressources, transmises par un second dispositif via une interface frontale, dans lequel les données du terminal ordonnancé sont des données obtenues par le second dispositif via l'exécution d'un premier prétraitement dans le domaine spatial sur des données de bande de base du terminal ordonnancé, dans lequel le premier prétraitement dans le domaine spatial comporte au moins les étapes consistant à : embrouiller et moduler les données de bande de base du terminal ordonnancé, et mapper les données du terminal ordonnancé à une pluralité de couches de données en fonction d'un nombre de flux de données parallèles qui peuvent être pris en charge ;
un module d'exécution (402) configuré pour exécuter un second prétraitement dans le domaine spatial sur les données du terminal ordonnancé reçues par le module de réception (401), dans lequel le second prétraitement dans le domaine spatial exécuté par le module d'exécution (402) sur les données du terminal ordonnancé reçues par le module de réception (401) comporte les étapes consistant à : mapper, par le premier dispositif, les données du terminal ordonnancé provenant de couches de données à des ports de signaux de référence en fonction d'une relation de mappage entre les couches de données et les ports de signaux de référence, et exécuter une formation de faisceau sur les données du terminal ordonnancé en utilisant le vecteur de formation de faisceau, ou exécuter un traitement de précodage sur les données du terminal ordonnancé en utilisant la matrice de précodage, et mapper des données formées en faisceau ou précodées du terminal ordonnancé à une sous-porteuse ; et
un module de transmission (403) configuré pour convertir des données obtenues par le module d'exécution (402) exécutant le second prétraitement dans le domaine spatial en un signal radiofréquence, et pour transmettre le signal radiofréquence.

4. Dispositif de transmission de données de liaison descendante, le dispositif comportant :
un module d'exécution (501) configuré pour exécuter un premier prétraitement dans le domaine spatial sur des données de bande de base d'un terminal ordonnancé pour obtenir des données du terminal ordonnancé et déterminer un schéma d'allocation de ressources du terminal ordonnancé, et un vecteur de formation de faisceau ou une matrice de précodage utilisé par le terminal ordonnancé dans le schéma d'allocation de ressources, dans lequel le premier prétraitement dans le domaine spatial comporte au moins les étapes consistant à : embrouiller et moduler les données de bande de base du terminal ordonnancé, et mapper les données du terminal ordonnancé obtenues en résultat de l'embrouillage et de la modulation à une pluralité de couches de données en fonction d'un nombre de flux de données parallèles qui peuvent être pris en charge ; et
un module de transmission (502) configuré pour transmettre les données du terminal ordonnancé, le schéma d'allocation de ressources du terminal ordonnancé, et le vecteur de formation de faisceau ou la matrice de précodage utilisé par le terminal ordonnancé dans le schéma d'allocation de ressources à un premier dispositif via une interface frontale, de sorte que le premier dispositif exécute un second prétraitement dans le domaine spatial sur les données du terminal ordonnancé et convertit des données obtenues en résultat du second prétraitement dans le domaine spatial en un signal radiofréquence et transmet le signal radiofréquence.
